# EUROPEAN PATENT SPECIFICATION

(11) **EP 0 953 307 B1**
(45) Date of publication and mention of the grant of the patent: **23.01.2002**
(21) Application number: 98305185.5
(22) Date of filing: 30.06.1998
(51) Int. Cl.: A47J 37/06

(54) **Indoor grill**
Grill zum Anwenden im Haus
Gril pour utiliser à l'intérieur

(30) Priority: 30.04.1998 US 70183
(43) Date of publication of application: 03.11.1999
(73) Proprietor: Wing Shing Products (BVI) Co. Ltd., Road Town, Tortola (VG)
(72) Inventor: Sham, Jhon Chun Kuen, Hong Kong (HK); Kunavongvorakul, Kumkit, Thungkru, Ratburana, Bankok (TH)
(74) Representative: Woodward, John Calvin

(56) References cited:
- EP-A- 0 818 168
- FR-A- 2 491 317
- FR-A- 2 671 858
- US-A- 5 259 299
- US-A- 5 504 295

## Description

The present invention relates to a grill apparatus and, more particularly, to an indoor, steam grill that can impart flavours and spicy aromas to grilled foods.

Many people like the taste of grilled foods, but not everyone has the luxury of having an outdoor barbecue. The present invention provides a small grill apparatus for indoor use, which uniquely impart flavours and aromas to meats, fish or poultry being grilled.

It is an object of this invention to provide an improved indoor grill.

It is another object of the invention to provide a grill apparatus that combines steam with the grilling to enhance the flavour of the food.

It is a further object of this invention to provide an indoor grill that is heat efficient.

It is known from US 5,504,295 to provide an indoor grill unit comprising An indoor grill unit, comprising a body portion comprising a thermally conductive material, which acts like a heat sink, said body having a plurality of grill elements on an upper surface thereof heating elements buried in the body portion for providing heat to said grill elements, an insulative base supporting said body portion, and a water reservoir located in the mid-portion of said base.

An indoor grill unit according to the present invention is characterised in that the grill elements are configured to heat water in the water reservoir to generate steam to assist in cooking food placed on the grill elements.

Preferably, the grill body is shaped like a serving dish, and is made of lightweight, heat conductive material, such as diecast aluminium. The heating elements or coils are conveniently disposed within the body of the grill, thus providing efficient heat transfer by reason that the body act as a heat sink that insures a rapid rise to heating temperatures. The grill is also light in weight. A water reservoir is located in the middle of the base of the grill and water contained in the reservoir is heated along with the grill, so that stem is emitted from the reservoir during the cooking cycle thus improving the cooking process. The steam issuing from perforations in the shell of the reservoir tank surrounds the food as it is being cooked thus improving the cooking process. Spices and flavourings can be added to the water as the reservoir starts to heat, thus imparting spicy aromas and flavours to the food.

A section of the grill is preferably slightly sloped, allowing juices, oils and fats to drain into the reservoir which, as aforementioned, is located in the base of the grill. The draining oils and fats allow the unit to cook cleaner (i.e., with less smoke). The die cast aluminium body is surrounded by a jacket preferably made of phenolic, which provides good insulation. The elements of the grill are preferably coated with a non-stick coating comprising PTFE or equivalent.

Preferably an adjustable thermal control allows the unit to be set to different cooking temperatures in order to correctly prepare the various foods.

The invention will now be described, by way of example only, with reference to the accompanying drawings, in which:
Figure 1 illustrates a sectional side view of the indoor grill of this invention; and
Figure 2 depicts a plan view of the indoor grill shown in Figure 1.

Generally speaking, the invention features an indoor grill having a steam-generating reservoir. The reservoir is heated by the heating elements used to heat the grill structure of the unit. The combination of steaming and grilling provides a flavourful quality to meats and other foods prepared therein. The heating elements of the grill are disposed in the metal body of the unit, which acts like a heat sink. The heat sink ensures that the unit attains cooking temperatures faster.

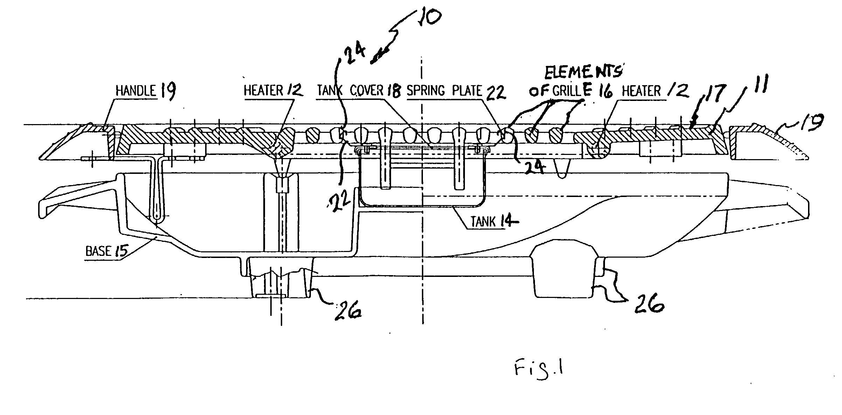

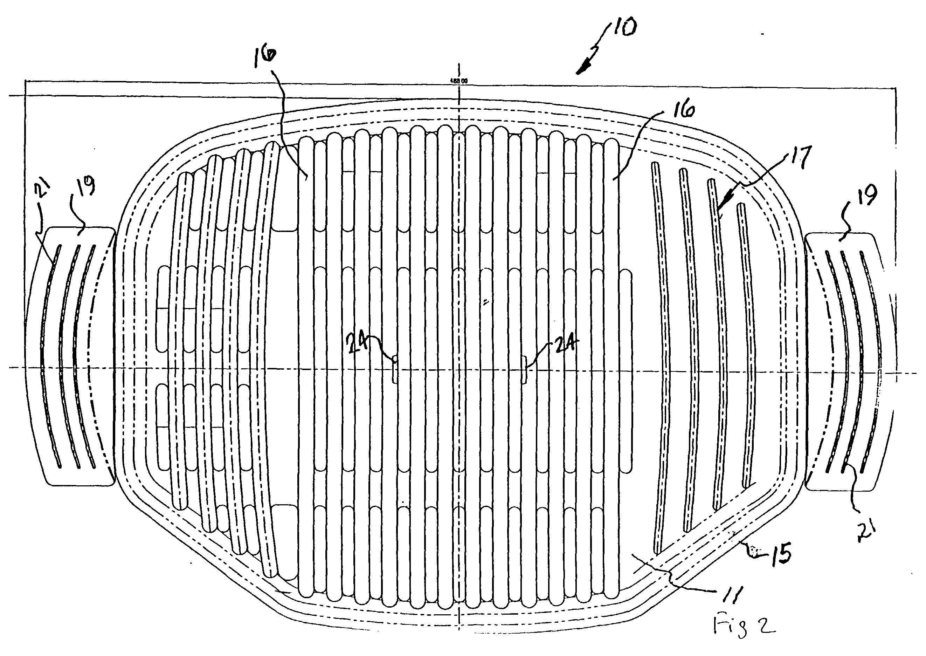

Now referring to Figures 1 and 2, there is shown an indoor grill unit 10 which comprises a metal or thermally conductive body 11, which is preferably fabricated from diecast aluminium. The metal body 11 acts as a heat sink for the heating elements 12 that are buried in the body 11. The heat sink ensures a rapid rise to heating temperatures. The grill 10 is also light in weight.

A water reservoir tank 14 is located in the middle of the base 15 of the grill unit 10. The water in the reservoir is heated along with the grill cross elements 16, so that steam, not shown, is emitted from the reservoir during the cooking cycle. The steam issuing from perforations, not shown, in the tank cover 18 surrounds the food as it is being cooked, thus improving the cooking process. Spices, herbs, seasonings, and flavourings can be added to the water or liquid as the reservoir starts to heat, thus imparting spicy aromas and flavours to the food. The cover 18 is spring-loaded with respect to the grill body 11. The spring plates 22 snap into the grooves 24 provided in middle elements 16.

The right hand section 17 is slightly sloped, causing juices, oils, and fats to drain into the reservoir tank 14 which, as aforementioned, is located in the base 15. The draining oils and fats allow the unit 10 to cook cleaner (i.e. with less smoke).

The base 15 comprises high-temperature resistant plastic. The preferred plastic is phenolic. The base 15 comprises four legs 26 that distance the grill unit 10 from a kitchen table.

The elements 16 of the grill 10 are coated with a non-stick coating comprising a teflonized material, such as PTFE. PTFE is preferred because it also provides abrasion resistance.

The grill unit 10 has plastic handles 19 on its distal ends, which allow the body 11 of the grill 10 to be lifted out of the base 15. The handles 19 have ridges 21 for facilitating gripping, as illustrated in Figure 2.

An adjustable thermal control, not shown, allows the unit 10 to be set to different cooking temperatures in order to correctly prepare various foods.

By mounting the heater in the metal body, it is better protected from corrosion and damage due to knocks and furthermore, it can also be washed in a dishwasher.

## Claims

1. An indoor grill unit, comprising:
a body portion (11) comprising a thermally conductive material, which acts like a heat sink, said body having a plurality of grill elements (16) on an upper surface thereof:
heating elements (12) buried in the body portion for providing heat to said grill elements (16);
an insulative base (15) supporting said body portion; and
a water reservoir (14) located in the mid-portion of said base (15)
**characterised in that** the grill elements (16) are configured to heat water in the water reservoir to generate steam to assist in cooking food placed on the grill elements (16).

2. The indoor grill unit in accordance with claim 1, **characterised in that** said water reservoir (14) comprises a tank having a tank body with a perforated lid (18).

3. An indoor grill unit in accordance with claim 2, **characterised in that** said perforated lid (18) is spring-loaded with respect to said grill body.

4. The indoor grill unit in accordance with any preceding claim **characterised in that** said grill body has a section (17) that slopes with respect to said base (15) causing juices, oils, and fats to drain into the water reservoir (14) during a cooking cycle.

5. The indoor grill unit in accordance with any preceding claim **characterised in that** said base (15) comprises a high-temperature resistant plastic.

6. The indoor grill unit in accordance with claim 5 **characterised in that** said base (15) comprises a phenolic.

7. The indoor grill unit in accordance with any preceding claim **characterised in that** said grill elements (16) are coated with a substantially non-stick material.

8. The indoor grill unit in accordance with claim 7, **characterised in that** said substantially non-stick material comprises PTFE.

## Patentansprüche

1. Hausgrilleinheit, umfassend:
ein Gehäuseteil (11), umfassend ein wärmeleitendes Material, das als Abstrahlkörper dient, wobei das Gehäuse an seiner Oberfläche eine Mehrzahl von Grillelementen (16) aufweist;
Heizelemente (12), die in dem Gehäuseteil versenkt sind, zur Versorgung der Grillelemente (16) mit Wärme; eine isolierende Grundplatte (15), die das Gehäuseteil trägt; und
ein Wasserreservoir (14), das im Mittelteil der Grundplatte (15) angeordnet ist.
**dadurch gekennzeichnet, daß** die Grillelemente (16) so konfiguriert sind, daß Wasser im Wasserreservoir zur Erzeugung von Dampf erwärmt wird, um das Garen von Nahrungsmitteln zu unterstützen, die auf den Grillelementen (16) angeordnet sind.

2. Hausgrilleinheit nach Anspruch 1, **dadurch gekennzeichnet, daß** das Wasserreservoir (14) einen Behälter umfaßt, der einen Behälterkasten mit einem perforierten Deckel (18) aufweist.

3. Hausgrilleinheit nach Anspruch 2, **dadurch gekennzeichnet, daß** der perforierte Deckel (18) in bezug auf das Grillgehäuse federbelastet ist.

4. Hausgrilleinheit nach einem der vorangehenden Ansprüche, **dadurch gekennzeichnet, daß** das Grillgehäuse einen Abschnitt (17) aufweist, der in bezug auf die Grundplatte (15) abgeschrägt ist, so daß Säfte, Öle und Fette während eines Garzyklus in das Wasserreservoir (14) ablaufen können.

5. Hausgrilleinheit nach einem der vorangehenden Ansprüche, **dadurch gekennzeichnet, daß** die Grundplatte (15) aus einem hochtemperaturbeständigen Kunststoff besteht.

6. Hausgrilleinheit nach Anspruch 5, **dadurch gekennzeichnet, daß** die Grundplatte (15) aus einem Phenolkunststoff besteht.

7. Hausgrilleinheit nach einem der vorangehenden Ansprüche, **dadurch gekennzeichnet, daß** die Grillelemente (16) mit einem im wesentlichen nichthaftenden Material überzogen sind.

8. Hausgrilleinheit nach Anspruch 7, **dadurch gekennzeichnet, daß** das im wesentlichen nichthaftende Material PTFE umfaßt.

## Revendications

1. Une unité de gril d'intérieur comprenant :
une portion constituant un corps (11) réalisé en un matériau thermiquement conducteur, jouant le rôle de réservoir de chaleur, ledit corps se composant d'une pluralité d'éléments de gril (16) sur sa surface supérieure ;
des éléments chauffants (12) noyés dans le corps en vue d'apporter de la chaleur aux dits éléments de gril (16) ;
une base isolante (15) supportant ledit corps ; et
un réservoir d'eau (14) logé dans la portion intermédiaire de ladite base (15), **caractérisée en ce que** les éléments de gril (16) ont une configuration telle qu'ils chauffent de l'eau dans les réservoirs d'eau de manière à générer de la vapeur d'eau qui aide à la cuisson de l'aliment placé sur les éléments de gril (16).

2. L'unité de gril d'intérieur selon la revendication 1, **caractérisée en ce que** ledit réservoir d'eau (14) consiste en un bac comportant un corps présentent un couvercle perforé (18).

3. Une unité de gril d'intérieur selon la revendication 2, **caractérisée en ce que** ledit couvercle perforé (18) est soumis à un ressort par rapport audit corps de gril.

4. L'unité de gril d'intérieur selon l'une quelconque des revendications précédentes, **caractérisée en ce que** ledit corps de grille présente une section (17) en pente par rapport à ladite base (15), ce qui provoque l'écoulement des jus, huiles et graisses dans le réservoir d'eau (14) au cours d'un cycle de cuisson.

5. L'unité de gril d'intérieur selon l'une quelconque des revendications précédentes, **caractérisée en ce que** ladite base (15) est constituée en une matière plastique résistante aux hautes températures.

6. L'unité de gril d'intérieur selon la revendication 5, **caractérisée en ce que** ladite base (15) est constituée en une résine phénolique.

7. L'unité de gril d'intérieur selon l'une quelconque des revendications précédentes, **caractérisée en ce que** lesdits éléments de gril (16) sont revêtus d'un matériau sensiblement non collant.

8. L'unité de gril d'intérieur selon la revendication 7, **caractérisée en ce que** ledit matériau non collant est du PTFE (polytétrafluoro-éthylène ou Teflon).
